# DEMANDE DE BREVET EUROPEEN

(11) **EP 2 150 051 A2**
(43) Date de publication de la demande: **03.02.2010**
(21) Numéro de dépôt: 09166176.9
(22) Date de dépôt: 23.07.2009
(51) Int. Cl.: H04N 7/167

(54) **Dispositif et procédé de contrôle parental élaboré**

(30) Priorité: 31.07.2008 FR 0855299
(71) Demandeur: Alcatel Lucent, 75008 Paris (FR)
(72) Inventeur: Delegue, Gérard, 91620 Nozay (FR); Ly, Muy-Chu, 91620 Nozay (FR)
(74) Mandataire: Hedarchet, Stéphane

(57) **Abrégé**

Procédé est système de censure et/ou de mise en valeur de signaux audiovisuels pour un récepteur client de tels signaux audiovisuels, comprenant les étapes suivantes :
- réception d'un signal audiovisuel et d'au moins une étiquette de métadonnée correspondant à au moins une séquence incluse dans le signal audiovisuel où les étiquettes de métadonnées comprennent des données de niveau de censure et/ou de mise en valeur,
- récupération de données de profils aptes à définir des niveaux de censure et/ou de mises en valeur maxima pour lesquels la diffusion des séquences correspondantes est permise et/ou conseillée, et
- détermination, par comparaison des données de profils récupérées et du niveau de censure de ladite séquence, du caractère diffusable ou non diffusable de ladite séquence du signal audiovisuel,
- diffusion du signal audiovisuel vers le récepteur client,

**caractérisé en ce que :**
suite à la visualisation dudit signal audiovisuel, le titulaire d'un compte de profil administrateur du terminal client accède à un système de contrôle parental fonctionnant en mode collaboratif pour enrichir les données de mise en valeur et/ou de niveau de censure liées à ladite séquence sous forme de création, addition ou suppression de données de mise en valeur et/ou de niveau de censure.

## Description

La présente invention concerne le traitement de censure et/ou de mise en valeur de flux audiovisuels afin de protéger certains spectateurs de séquences pouvant être choquantes (ou violentes) et/ou afin de mettre en avant certaines séquences pouvant être les moments forts du flux audiovisuel.

Le marché de la télévision et surtout du WEB sont des marchés de masse en pleine extension, notamment avec l'explosion du WEB 2.0 et l'apparition de la télévision numérique et de nombreuses nouvelles technologies telles que IPTV, DVB-T, DVB-H, DVB-SH, T-DMB, S-DMB qui permettent d'offrir au spectateur/utilisateur de nouveaux contenus et services.

Les enfants sont de plus en plus réceptifs aux technologies et passent de plus en plus de temps à regarder et/ou à écouter des contenus diffusés sur Internet et des programmes de télévision et à utiliser des services. La grande quantité de programmes disponibles peut être un problème du point de vue parental, en ce qu'il devient difficile pour les parents de sélectionner et de limiter les contenus proposés à leurs enfants.

Dans tout programme et même dans des programmes d'actualité basiques, certaines parties de programme, encore nommées séquences peuvent être choquantes et/ou violentes pour des enfants ou personnes sensibles. Nombreux sont les parents qui aimeraient disposer d'un moyen pour laisser leurs enfants visualiser, écouter des contenus sur le WEB et regarder la télévision sans être inquiétés par de possibles séquences violentes ou réservées aux adultes.

Dans le domaine de la censure de flux audiovisuels, il est connu de pratiquer une censure s'appliquant au programme dans son entier en fonction de l'âge, alors même que certains programmes ne contiennent que quelques séquences qui nécessiteraient d'être censurées.

Il est encore connu du document US 2004/210928 d'utiliser les métadonnées associées aux séquences audiovisuelles pour réaliser un brouillage des séquences censurées. Cette solution est incomplète dans la mesure où elle ne tient pas compte de la sensibilité respective à chacune des familles ou foyers susceptibles de recevoir les séquences audiovisuelles. Certaines séquences peuvent être considérées comme des moments forts ou non, choquantes ou non, violentes ou non, réservées uniquement à un public adulte ou non : ces considérations sont variables en fonction des familles ou foyers spectateurs.

La présente invention remédie à ces différents inconvénients en proposant un système et un procédé permettant de tenir compte efficacement des contributions d'adjonctions/modifications/suppressions/vérifications de censures et/ou de mises en valeur apportées par chacune des familles ou foyers lors de leurs évaluations quant au caractère à censurer et/ou à mettre en valeur des séquences.
L'invention a pour objet un procédé de censure et/ou de mise en valeur de signaux audiovisuels pour un récepteur client de tels signaux audiovisuels, comprenant les étapes suivantes :
- réception d'un signal audiovisuel et d'au moins une étiquette de métadonnée correspondant à au moins une séquence incluse dans le signal audiovisuel, où les étiquettes de métadonnées comprennent des données de niveau de censure et/ou de mise en valeur,
- récupération de données de profils aptes à définir des niveaux de censure et/ou de mise en valeur maxima pour lesquels la diffusion des séquences correspondantes est permise et/ou conseillée, et
- détermination, par comparaison des données de profils récupérées et du niveau de censure de ladite séquence, du caractère diffusable ou non diffusable de ladite séquence du signal audiovisuel,
- diffusion du signal audiovisuel vers le récepteur client,
caractérisé en ce que :
suite à la visualisation dudit signal audiovisuel, le titulaire d'un compte de profil administrateur du terminal client accède à un système de contrôle parental fonctionnant en mode collaboratif pour enrichir les données de niveau de censure et/ou de mises en valeur liées à ladite séquence sous forme de création, addition ou suppression de données de niveau de censure et/ou de mise en valeur.

Ce système de contrôle parental permet aussi de détecter si ces données enrichies de niveau de censure et/ou de mise en valeur sont ou ne sont pas similaires à des données de niveau de censure et/ou de mise en valeur existantes (provenant d'une autre communauté ou d'une institution) afin d'éviter des duplications de données.

Selon une caractéristique de l'invention, l'accession du titulaire administrateur donne lieu à la vérification, création, addition ou suppression de données de niveau de censure et/ou de mise en valeur si la modification suggérée n'existait préalablement pas, et donne lieu à une objection d'existence d'une telle modification existait préalablement.
Selon une caractéristique de l'invention, l'objection d'existence peut être surmontée par le titulaire administrateur pour enrichir, malgré tout, les données de niveau de censure et/ou de mise en valeur.

L'invention concerne également un système de censure et/ou de mise en valeur de signaux audiovisuels pour un récepteur client de tels signaux audiovisuels comprenant :
- des moyens de réception d'un signal audiovisuel et d'au moins une étiquette de métadonnée correspondant à au moins une séquence incluse dans le signal audiovisuel, où les étiquettes de métadonnées comprennent des données de niveau de censure et/ou de mise en valeur,
- des moyens de récupération de données de profils aptes à définir des niveaux de censure et/ou de mise en valeur maxima pour lesquels la diffusion des séquences correspondantes est permise et/ou conseillée, et
- des moyens de détermination, par comparaison des données de profils récupérées et du niveau de censure de ladite séquence, du caractère diffusable ou non diffusable de ladite séquence du signal audiovisuel,
- des moyens de diffusion du signal audiovisuel vers le récepteur client,
caractérisé en ce qu'il comprend :
- des moyens d'accession, suite à la visualisation dudit signal audiovisuel, par le titulaire d'un compte de profil administrateur du terminal client à un système de contrôle parental fonctionnant en mode collaboratif pour enrichir les données de niveau de censure et/ou de mise en valeur liées à ladite séquence sous forme de création, addition ou suppression de données de niveau de censure et/ou de mise en valeur.

Un avantage du dispositif et du procédé selon l'invention est de permettre aux utilisateurs d'enrichir et de faire partager de façon interactive (i.e par le biais d'adjonctions/modifications/suppressions) des recommandations relatives à des séquences censurées ou mises en évidence comme étant censurables et/ou comme étant les moments forts, ceci au sein d'une communauté.

D'autres caractéristiques, détails et avantages de l'invention ressortiront plus clairement de la description détaillée donnée ci-après à titre indicatif en relation avec des dessins sur lesquels :

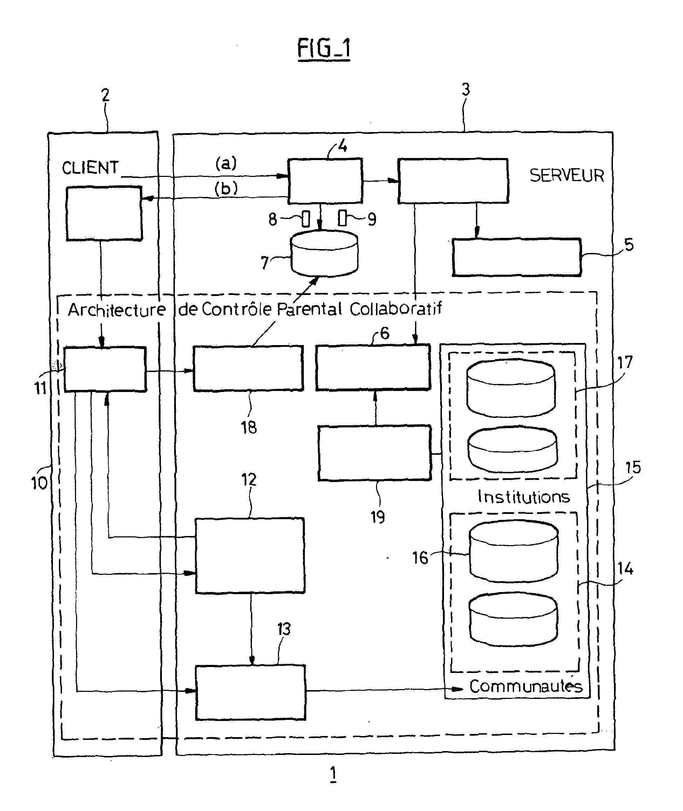

- la figure 1 présente un schéma fonctionnel d'un mode de réalisation du système selon l'invention.

Selon la figure 1, un système 1 traite des signaux audiovisuels. Ces signaux audiovisuels constituent des programmes audiovisuels, qui se subdivisent en séquences. Ces signaux audiovisuels sont stockés au sein d'un serveur audio/vidéo 5 d'un serveur 3. Ces signaux audiovisuels sont accompagnés d'étiquettes de métadonnées correspondant à ces séquences. Ces signaux sont destinés à être adressés à un terminal client 2 (qui peut être un terminal de radiocommunications du type téléphone mobile, PDA, ou un terminal fixe du type PC, téléviseur, etc.).

Une métadonnée (du grec meta "après" et du latin data "informations") est une donnée servant à définir ou décrire une autre donnée.

Une étiquette, encore appelée mot-clé (tag en anglais) est un enregistrement de métadonnées. Une étiquette est un mot-clé pertinent associé avec ou assigné à une donnée, dans le cas présent une séquence de programme audiovisuel, et décrivant cette donnée. Les étiquettes sont généralement déterminées par l'auteur/créateur/producteur de la donnée et permettent de renseigner la sémantique de la donnée. Une donnée peut avoir une ou plusieurs étiquettes associées.

Pour une séquence audiovisuelle, les étiquettes de métadonnées comprennent des données de niveau de censure et/ou de mise en valeur. Ainsi pour chaque séquence pourra être défini soit un spectateur autorisé type, par exemple sous forme d'un âge minimum conseillé pour regarder la séquence, soit un niveau de dangerosité de la séquence, par exemple une notation de la séquence sur une ou plusieurs échelles. Une séquence pourra par exemple être, notée sur une échelle de violence, sur une échelle de sexualité, sur une échelle de correction politique et/ou sur une échelle psychologique.

Selon le mode de réalisation de l'invention, le terminal client 2 se connecte, via une étape (a) de connexion, à un serveur 4 d'authentification/autorisation/compte nécessaire pour l'accès aux sites sécurisés de communautés restreintes et pour interdire à toute personne d'effacer les vidéos/audios et leurs bases de données de recommandations stockées dans le serveur 3. Un pare-feu 6 est utilisé en sortie du serveur 4 pour faire respecter la politique de sécurité du serveur 3. Les vidéos et/ou audios issus du serveur 5 de contenus vidéo/audio, couplés à des recommandations de censures et/ou de mises en valeur provenant d'un serveur de recommandations 6 de censures et/ou de mises en valeur (qui sera décrit plus loin), sont transmises vers le terminal 2 en fonction de profils utilisateurs du destinataire de ces contenus. Il existe deux types de profils utilisateurs :
- un profil non administrateur (par exemple des enfants ou personnes sensibles telles que les personnes âgées) qui ne peut visualiser ou écouter une séquence vidéo ou audio que s'il lui est associée une recommandation de données de censure positive, celle-ci étant décidée par un profil administrateur tel que décrit ci-après. Dans la suite, pour une meilleure concision, une recommandation de données de censure positive sera appelée une recommandation d'autorisation.
- un profil administrateur, par exemple applicable à un parent apte à définir les règles de censure et/ou de mise en valeur pour le contrôle parental applicable à ses enfants ou personnes sensibles: un tel profil administrateur peut créer et adhérer à une communauté, accéder à une recommandation relative à une séquence vidéo ou audio à des fins de vérifications, modifications et également de mise à jour (i.e création/modification/suppression) des profils non-administrateurs au sein de cette même communauté (par exemple les enfants de ce parent).

Ainsi, le contenu audiovisuel est transmis du serveur 5 vers le terminal 2, via le serveur 4, en mode broadcast ou unicast (étape (b)). Un module de gestion de censure 8 associé à un module d'activation 9 de censure détermine si une séquence doit/peut être diffusée ou non. Cette détermination de censure s'effectue en comparant les données de niveau de censure de la séquence issues des étiquettes de métadonnées 2 avec les données de profils du module 7. Cette comparaison de niveaux détermine un caractère diffusable ou non diffusable d'une séquence du signal audiovisuel. Ainsi, par exemple, pour un profil autorisant un niveau de violence de 2, une séquence ne peut être diffusée que si son niveau de violence est inférieur ou égal à 2. Dans le cas contraire, cette séquence est censurée.

Une fois que le contenu audiovisuel est visualisé, et si le profil de la personne ayant visualisé est celui d'un administrateur, ce dernier peut envoyer à un sous-système 10 (dont les limites sont figurées par les pointillés de la figure 1) des modifications/ajouts/suppression des données de censure et/ou de mise en valeur reçues concernant le contenu audiovisuel visualisé. Ce message de demande de modifications/ajout/suppression des données de censure et/ou de mise en valeur concernant le contenu reçu est entré dans un module 11 éditeur de recommandations (il est entendu que dans la présente demande une recommandation recouvre le même sens que celui de données de censure et ou de mise en valeur). Ce module 11 éditeur permet à un utilisateur ayant un profil administrateur de modifier les données de censure et ou de mise en valeur (les recommandations) et de les partager au sein d'une même communauté. Le module 11 éditeur transmet la requête de modification de recommandation (données de censure et/ou de mise en valeur) à un module 12 de recherche d'une recommandation similaire à celle pour laquelle le présent administrateur s'est montré intéressé de modifier. Cette démarche d'enrichissement du système avec la recommandation dudit administrateur peut aboutir à deux alternatives :
- Si le module 12 ne détecte aucune occurrence similaire, une phase d'enrichissement est élaborée au sein d'un module 13 d'enrichissement de recommandations. Cette contribution, apportée par le présent administrateur, est fusionnée au sein de l'une au moins des bases de données du bloc mémoire 15. Ce bloc mémoire comporte une pluralité de bases de données de recommandations, chacune (du type de celle référencée 16) se référant à une communauté respective ciblée sur un flux audiovisuel spécifique. On ne s'attardera pas aux différents mécanismes d'adhésion à une communauté et aux différents cas possibles de création de communautés vis-à-vis d'un même flux audiovisuel. En outre, une au moins des bases de données (du type de celle référencée 17) peut correspondre à des recommandations émanant d'organismes institutionnels, comme par exemple le CSA en France (dit également Conseil National de l'Audiovisuel, en charge de la régulation de l'Audiovisuel en France).
- Si, au contraire, le module 12 détecte que la même recommandation existe dans une communauté, la requête est retournée au module 11 éditeur qui le signifie audit administrateur. Deux options s'offrent alors à ce dernier :
   - si l'administrateur accepte la proposition du système quant à la similitude objectée avec une recommandation existante, un module 18 de mise à jour des données de profil avec des recommandations existantes est activé. Ce module met à jour les données enregistrées dans le module de gestion de censure 8 et le module d'activation 9 de censure. Par exemple, suite à la visualisation d'une série de séquences, l'administrateur s'est rendu compte qu'une séquence particulière pourrait être choquante pour son enfant. Il recommande donc de censurer celle-ci. Si une telle recommandation est déjà existante dans une base de donnée du système, et qu'il accepte cette recommandation émanant du système telle qu'elle est formulée, il peut alors, via les modules 18, 7, 8 et 9, procéder à la mise à jour des données de profil et des données de censure (gestion et activation de censure) liée à la visualisation de cette séquence par ses enfants.
   - Si, par contre, l'administrateur décide à intégrer malgré tout sa recommandation dans une base de données communautaire, il lui en est donné la possibilité par voie d'entrée du module 13 d'enrichissement de recommandations.

Les base de données communautaires et institutionnelles sont ainsi élaborées.

Le serveur de recommandations 6 utilise, quant à lui, un module 19 gestionnaire de vues de recommandations, ceci afin de trouver les recommandations correspondant à un flux audiovisuel sélectionné par un utilisateur en fonction de son profil utilisateur et de sa communauté.

Le module 19 gestionnaire de vues de recommandations contient une liste de vues de recommandations. Chaque vue de recommandations correspond à une communauté créée : une vue de recommandations est élaborée à partir d'une ou plusieurs bases de données de recommandations existantes correspondant à des séquences de niveau de censure et/ou de la mise en valeur sélectionnées d'un flux audiovisuel.

## Revendications

1. Procédé de censure et/ou de mise en valeur de signaux audiovisuels pour un récepteur client de tels signaux audiovisuels, comprenant les étapes suivantes :
- réception d'un signal audiovisuel et d'au moins une étiquette de métadonnée correspondant à au moins une séquence incluse dans le signal audiovisuel, où les étiquettes de métadonnées comprennent des données de niveau de censure et/ou de mise en valeur,
- récupération de données de profils aptes à définir des niveaux de censure et/ou de mise en valeur maxima pour lesquels la diffusion des séquences correspondantes est permise et/ou conseillée, et
- détermination, par comparaison des données de profils récupérées et du niveau de censure de ladite séquence, du caractère diffusable ou non diffusable de ladite séquence du signal audiovisuel,
- diffusion du signal audiovisuel vers le récepteur client,
**caractérisé en ce que** :
suite à la visualisation dudit signal audiovisuel, le titulaire d'un compte de profil administrateur du terminal client accède à un système de contrôle parental fonctionnant en mode collaboratif pour enrichir les données de niveau de censure liées à ladite séquence sous forme de création, addition ou suppression de données de niveau de censure.

2. Procédé de censure et/ou de mise en valeur selon la revendication 1, **caractérisé en ce que** l'accession du titulaire administrateur donne lieu à la création, addition ou suppression de données de niveau de censure ou de mise en valeur si la modification suggérée n'existait préalablement pas, et donne lieu à une objection d'existence d'une telle modification si celle-ci existait préalablement.

3. Procédé de censure et/ou de mise en valeur selon la revendication 2, **caractérisé en ce que** l'objection d'existence peut être surmontée par le titulaire administrateur pour enrichir malgré tout les données de niveau de censure et/ou de mise en valeur.

4. Système de censure et/ou de mise en valeur de signaux audiovisuels pour un récepteur client de tels signaux audiovisuels comprenant :
- des moyens de réception d'un signal audiovisuel et d'au moins une étiquette de métadonnée correspondant à au moins une séquence incluse dans le signal audiovisuel, où les étiquettes de métadonnées comprennent des données de niveau de censure et/ou de mise en valeur,
- des moyens de récupération de données de profils aptes à définir des niveaux de censure et/ou de mise en valeur maxima pour lesquels la diffusion des séquences correspondantes est permise, et
- des moyens de détermination, par comparaison des données de profils récupérées et du niveau de censure de ladite séquence, du caractère diffusable ou non diffusable de ladite séquence du signal audiovisuel,
- des moyens de diffusion du signal audiovisuel vers le récepteur client,
**caractérisé en ce qu'**il comprend :
- des moyens d'accession, suite à la visualisation dudit signal audiovisuel, par le titulaire d'un compte de profil administrateur du terminal client à un système de contrôle parental fonctionnant en mode collaboratif pour enrichir les données de niveau de censure et/ou de mise en valeur liées à ladite séquence sous forme de création, addition ou suppression de données de niveau de censure et/ou de mise en valeur. Ce système de contrôle parental permet aussi de détecter si ces données enrichies de niveau de censure et/ou de mise en valeur sont ou ne sont pas similaires à des données de niveau de censure et/ou de mise en valeur existantes (provenant d'une autre communauté ou d'une institution) afin d'éviter des duplications de données.
